# FASCICULE DE BREVET EUROPEEN

(11) **EP 1 961 221 B1**
(45) Date de publication et mention de la délivrance du brevet: **20.06.2012**
(21) Numéro de dépôt: 06819798.7
(22) Date de dépôt: 28.11.2006
(51) Int. Cl.: H04N 21/6334

(54) **PROCEDE DE TRAITEMENT DE MESSAGES D'AUTORISATION A DESTINATION D'UNE PLURALITE DE RECEPTEURS MOBILES ET PROCEDE DE TRANSMISSION DE TELS MESSAGES**
VERFAHREN ZUM VERARBEITEN VON FÜR MEHRERE MOBILEMPFÄNGER BESTIMMTEN AUTHORISIERUNGSNACHRICHTEN UND VERFAHREN ZUM SENDEN SOLCHER NACHRICHTEN
METHOD OF PROCESSING AUTHORIZATION MESSAGES DESTINED FOR A PLURALITY OF MOBILE RECEIVERS AND METHOD OF TRANSMITTING SUCH MESSAGES

(30) Priorité: 30.11.2005 EP 05292545
(43) Date de publication de la demande: 27.08.2008
(73) Titulaire: NAGRA FRANCE SAS, 75015 Paris (FR)
(72) Inventeur: ZHAO, Yishan, F-92160 Antony (FR)
(74) Mandataire: Leman Consulting S.A.
(86) Numéro de dépôt international: PCT/EP2006/068974
(87) Numéro de publication internationale: WO 2007/063056

(56) Documents cités:
- EP-A- 0 975 109
- WO-A2-2005/091635
- US-B1- 6 584 199
- "FUNCTIONAL MODEL OF A CONDITIONAL ACCESS SYSTEM" EBU REVIEW- TECHNICAL, EUROPEAN BROADCASTING UNION. BRUSSELS, BE, no. 266, 1995, pages 64-77, XP002251132 ISSN: 0251-0936

## Description

### DOMAINE TECHNIQUE

La présente invention concerne de façon générale la transmission de contenus à destination de récepteurs mobiles. Ces contenus peuvent en particulier, mais pas exclusivement être des événements de télévision à péage, des contenus audio, des jeux, des logiciels ou des informations telles que des prévisions météorologiques, des informations boursières ou autres. Cette invention concerne également le traitement de tels messages.

Les récepteurs concernés peuvent en particulier être des téléphones portables, des assistants personnels (PDA), des ordinateurs portables, des récepteurs destinés à être placés dans des véhicules ou tout récepteur mobile développé pour une application utilisant les contenus indiqués ci-dessus.

De façon plus détaillée, l'invention concerne un procédé de transmission de messages d'autorisation à destination d'une pluralité de récepteurs mobiles, ainsi qu'un procédé de traitement des messages transmis selon ce procédé.

### TECHNIQUE ANTERIEURE

Dans le cadre de la diffusion de contenus tels que définis ci-dessus et en particulier de contenus de télévision à accès conditionnel à destination de récepteurs mobiles, connus sous l'acronyme DVB-H (Digital Video Broadcast - Handheld), les contenus sont envoyés de façon cyclique sous forme de paquets (connus sous le nom de Time Slices). Les paquets correspondent à des services. Un service peut être défini comme un ou plusieurs flux numériques formant un sous-ensemble du flux numérique global. Ce sous-ensemble partage un identifiant commun de telle sorte que l'on soit en mesure de créer un événement à partir de cet identifiant.

Les droits et autres commandes sont envoyés sous forme de messages d'autorisation également sous la forme de paquets. Ces paquets de messages d'autorisation sont considérés comme un service spécifique et sont donc envoyés sous forme de données de service.

Dans un environnement de diffusion, chaque message d'autorisation est diffusé de manière répétitive pour qu'il puisse atteindre effectivement son destinataire. Lorsque le nombre d'abonnés ou d'utilisateurs est grand, le nombre de messages à diffuser l'est aussi. Le paquet de chaque cycle contenant ces messages peut occuper une bande passante importante. En pratique, le nombre dé messages d'autorisation destinés à chaque récepteur est relativement faible. Malgré cela, les récepteurs reçoivent tous le paquet contenant les messages d'autorisation et les traitent pour déterminer si ces messages les concernent ou non.

Lorsque l'on utilise des récepteurs mobiles fonctionnant sur batteries, le problème de consommation d'énergie est particulièrement important. En effet, afin d'assurer une autonomie maximale au récepteur, il est utile de chercher à réduire au strict minimum, la consommation d'énergie. Pour ceci, il est donc essentiel de traiter aussi peu d'informations inutiles que possible.

Dans les systèmes de l'art antérieur, les messages d'autorisation, contenant en particulier des droits d'accès à des événements ou des clés permettant de déchiffrer des informations chiffrées, sont envoyés à l'ensemble des récepteurs ayant accès aux services concernés. Parmi cet ensemble de récepteurs, chaque message d'autorisation est en fait destiné à un faible nombre de récepteurs. Ceux-ci doivent malgré tout traiter ces messages d'autorisation, en particulier les recevoir et les déchiffrer le cas échéant, avant de pouvoir déterminer si les récepteurs sont réellement concernés ou non.

Ceci implique que le récepteur doit être en mode actif lors de la réception du paquet de messages d'autorisation et qu'il doit consommer de l'énergie pour recevoir et traiter des messages qui ne le concernent peut être pas. De l'énergie est donc souvent gaspillée, ce qui peut diminuer considérablement l'autonomie du récepteur mobile.

La demande EP 0 975 109 décrit un procédé de diffusion de contenu numérique à destination de récepteurs, dans lequel ces récepteurs ne sont enclenchés que lorsqu'un contenu leur est destiné. Pour réaliser ceci, le procédé comporte l'envoi préalable à chaque récepteur de tables d'informations. Ces tables d'informations comportent une indication d'un type d'information transmis, un identifiant des récepteurs auxquels ces informations sont destinées ainsi qu'une plage temporelle pendant laquelle les informations seront diffusées.

A réception d'une table d'information, le récepteur détermine à quels groupes il appartient et mémorise les plages horaires correspondant à la diffusion d'informations qui le concerne. Il se met ensuite en veille pour ne se mettre en mode réception que peu de temps avant que des informations qui le concerne ne soient diffusées.

Les récepteurs concernés sont en état éteint et se mettent en état de réception quelques secondes avant que des informations qui leur sont destinées ne soient envoyées. Ces informations sont envoyées pour chaque groupe de récepteur environ pendant une dizaine de minutes.

Dans un système utilisant des décodeurs portables, une durée de quelques secondes correspond à un cycle complet d'envoi de messages. Il en résulte qu'en utilisant le système décrit dans EP 0 975 109, aucune économie d'énergie n'est possible. Ce procédé n'est donc pas compatible avec la diffusion sur récepteurs mobiles.

De plus, pour qu'un récepteur puisse avoir accès aux messages d'autorisation qui le concerne, il est nécessaire qu'il ait reçu la table correspondante. Dans une application utilisant des récepteurs mobiles en particulier, cela signifie que cette table doit être envoyée de façon très fréquente pour qu'un utilisateur qui enclenche son unité à un moment donné ne doive pas attendre longtemps avant de pouvoir recevoir les messages correspondants. Il en résulte que le récepteur doit être enclenché pour obtenir la table qui le concerne, ce qui est en contradiction avec le but de l'invention qui est de réduire la consommation d'énergie.

### EXPOSE DE L'INVENTION

La présente invention se propose de pallier les inconvénients des procédés de l'art antérieur en réalisant un procédé dans lequel l'énergie est utilisée de façon optimale, c'est-à-dire qu'un minimum d'énergie est consommée pour traiter des messages qui ne concernent pas le récepteur qui reçoit ces messages ou en d'autres termes, qu'un maximum de messages traités par un récepteur concernent réellement ce récepteur. Selon cette invention, il n'y a pas d'envoi préalable d'indications de l'heure à laquelle des messages seront envoyés. De ce fait, il n'est pas nécessaire d'utiliser de l'énergie pour recevoir de telles indications.

Le but de l'invention est atteint par un procédé de traitement de messages d'autorisation par un récepteur mobile, caractérisé en ce que ces messages d'autorisation sont transmis de façon cyclique par paquets de messages, ces paquets de messages comprenant un sous-ensemble de messages d'autorisation, au moins un des paquets de messages d'autorisation étant destiné audit récepteur mobile et au moins un autre des paquets n'étant pas destiné au récepteur mobile, ce procédé comportant les étapes suivantes :
- réception de tous les paquets de messages d'autorisation par ledit récepteur mobile pendant la durée d'au moins un cycle;
- détermination d'au moins un groupe de récepteurs auquel appartient ledit récepteur mobile;
- parmi les paquets de messages d'autorisation reçu pendant un cycle, détermination de tous les paquets de messages d'autorisation destinés audit groupe de récepteurs auquel appartient ledit récepteur mobile;
- réception d'au moins un paquet de messages d'autorisation destiné au groupe de récepteurs auquel appartient ledit récepteur et absence de réception d'au moins un paquet de messages d'autorisation destiné à un groupe de récepteurs auquel ledit récepteur mobile n'appartient pas;
- traitement par le récepteur mobile, desdits messages reçus dans les paquets.

Le but de l'invention est également atteint par un procédé de transmission de messages d'autorisation à destination d'une pluralité de récepteurs mobiles, comportant les étapes suivantes :
- définition d'au moins un ensemble de messages d'autorisation dont une première partie, formant une première catégorie de messages, est destinée à un premier groupe de récepteurs mobiles et dont une seconde partie, formant une seconde catégorie de messages, est destinée à un second groupe de récepteurs mobiles;
- création d'un premier paquet de messages d'autorisation contenant au moins ladite première partie de l'ensemble des messages d'autorisation;
- création d'un second paquet de messages d'autorisation contenant au moins ladite seconde partie de l'ensemble des messages d'autorisation;
- transmission dudit premier paquet de messages d'autorisation sur un premier service, sans envoi préalable- d'informations indiquant à l'unité multimédia quels paquets de messages la concerne;
- transmission dudit second paquet de messages d'autorisation sur un second service distinct dudit premier service sans envoi préalable d'informations indiquant à l'unité multimédia quels paquets de messages la concerne.

La solution proposée par la présente invention consiste à segmenter l'ensemble des messages d'autorisation en groupes de messages de moindre taille en fonction de différents critères. Un premier type de critère concerne les messages d'autorisation et un deuxième type de critères concerne les récepteurs.

Les messages d'autorisation peuvent tout d'abord être segmentés de façon classique en messages d'autorisation globaux, partagés et individuels.

Les récepteurs mobiles sont organisés en plusieurs groupes ou catégories. Ces catégories sont définies sur la base de critères tels que par exemple le type de récepteur (téléphone mobile, PDA, récepteur pour voiture,...), le numéro d'identification, une catégorie de droits d'accès, une version de récepteur mobile ou de configuration de ce récepteur, etc.

Les messages d'autorisation sont regroupés de façon à former des paquets différents pour chaque type de message et/ou de catégorie de récepteurs. A la réception, les récepteurs filtrent les services de façon à ne traiter que les catégories de messages qui peuvent les concerner. Les messages des différents groupes sont envoyés sur des services différents, de manière similaire aux différents services utilisés pour transmettre des contenus audio/vidéo.

La gestion de la réception des services ne requiert pas l'envoi préalable de tables, mais se fait de manière similaire à l'envoi du contenu audio/vidéo. Ceci présente l'avantage que le procédé de l'invention est compatible avec les temps de cycle courts requis dans les applications utilisant des récepteurs mobiles. En outre, aucune énergie n'est consommée pour recevoir et traiter des informations relatives à l'envoi ultérieur de messages.

### DESCRIPTION SOMMAIRE DES DESSINS

La présente invention et ses avantages seront mieux compris en référence aux figures annexées et à la description détaillée de modes de réalisation particuliers, dans lesquelles :
- la figure 1 illustre l'émission de données par un fournisseur de contenu;
- la figure 2 illustre la réception des données par un récepteur mobile, ces données étant émises comme illustré par la figure 1;
- la figure 3 représente un premier mode de réalisation de la segmentation des données en catégories selon l'invention;
- la figure 4 représente un deuxième mode de réalisation de la segmentation des données en catégories, similaire à celui de la figure 3;
- la figure 5 représente schématiquement la réception de données sur la base des catégories illustrées par la figure 3; et
- la figure 6 représente la réception de données sur la base des catégories illustrées par la figure 4.

### MANIERES DE REALISER L'INVENTION

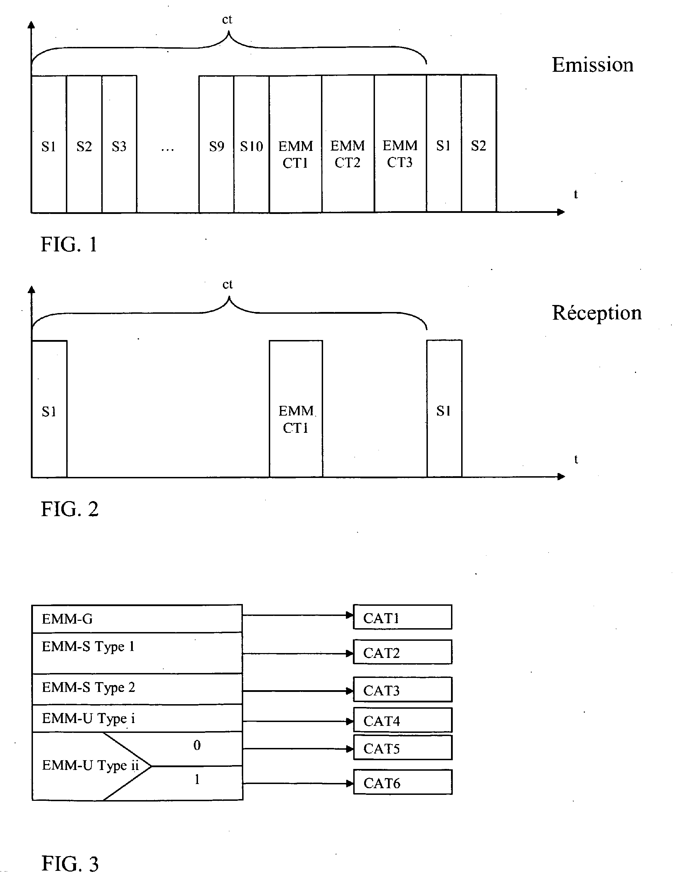

La figure 1 illustre le procédé de l'invention, vu du côté de l'émission de contenu. Dans le contexte de l'invention, des contenus tels que des événements de télévision à péage, des contenus audio, des jeux, des logiciels ou des informations telles que des prévisions météorologiques, des informations boursières ou autres sont diffusés par des fournisseurs de contenu. Dans l'invention, ces contenus sont destinés à des récepteurs mobiles tels que des téléphones portables, des assistants personnels (PDA), des ordinateurs portables, des récepteurs destinés à être placés dans des véhicules ou tout récepteur mobile développé pour une application utilisant les contenus indiqués ci-dessus. Ces récepteurs mobiles sont liés à un centre de gestion qui est notamment en charge de la gestion des droits d'accès, des abonnements, des clés de chiffrement des contenus, etc. Les fournisseurs de contenus et le centre de gestion peuvent être liés à une même entité ou être des entités distinctes.

De façon bien connue, les contenus diffusés à destination de récepteurs mobiles ne sont généralement pas diffusés en continu, comme dans le cas des récepteurs fixes, mais plutôt sous la forme de paquets de données. Ces paquets sont répartis en services distincts, notés S1, ... S10 sur la figure 1. Chaque paquet correspond à un canal ou un service. Les paquets sont diffusés de manière cyclique selon un temps de cycle généralement compris entre 2 et 5 secondes dans la pratique. Chaque paquet contient la quantité d'informations correspondant au temps de cycle choisi. A titre d'exemple, dans le cas de la diffusion d'un événement de télévision à péage, imaginons que le temps de cycle ct soit égal à 2 secondes. Le premier paquet noté S1 sur la figure 1 contient des données correspond à 2 secondes lorsqu'elles sont affichées sur le récepteur mobile. Après ce temps de cycle, un deuxième cycle recommence par la diffusion du contenu lié au service 1, et contenant également l'équivalent de 2 secondes de visualisation. La durée de transmission d'un paquet peut être compris entre 0,1 et 0,5 secondes environ en pratique. Ces temps de cycle et de transmission effective de chaque service sont tous configurables statiquement et/ou dynamiquement.

La figure 2 illustre la réception de contenu par un récepteur mobile. Imaginons que le récepteur soit calé sur le service S1. Il reçoit alors chaque paquet lié à ce service. In ne reçoit pas les autres paquets liés au contenu d'autres services, de sorte qu'il peut être mis en mode veille pendant la transmission des paquets liés aux autres services S2, ... S10. Selon une réalisation pratique, ce mode de réalisation permet une économie d'énergie jusqu'à 90%.

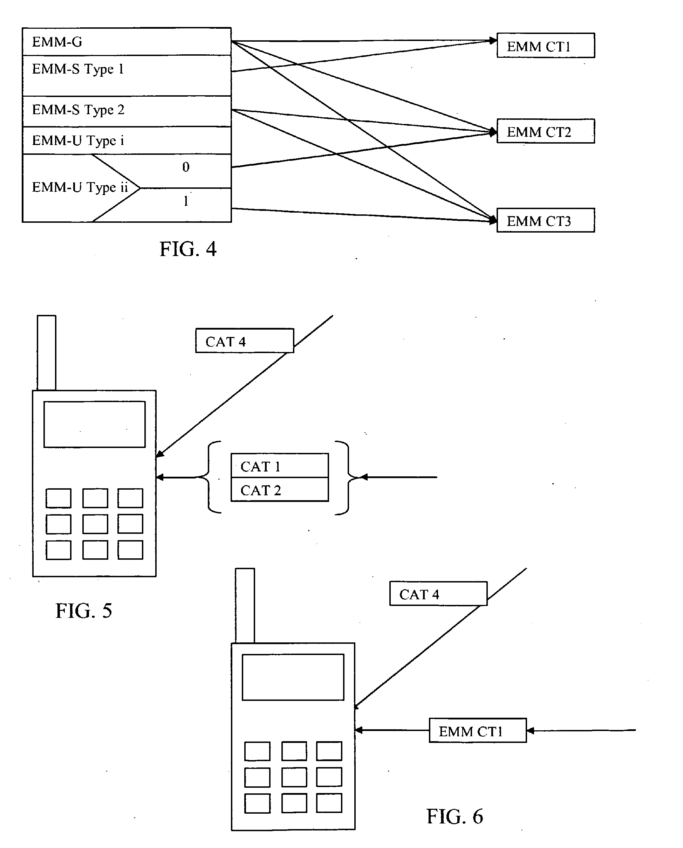

Dans la figure 1, en plus des paquets liés au contenu, des paquets liés aux messages d'autorisation sont également représentés. Ces paquets sont notés EMM CT1, EMM CT2 et EMM CT3. Chacun de ces paquets correspond à une catégorie particulière de message d'autorisation, comme cela est expliqué ci-dessous, en référence aux figures 3 et 4.

De façon générale, les messages d'autorisation peuvent contenir des droits d'accès à un ou des contenus particuliers, des clés permettant le déchiffrement de contenus ou de moyens d'accès à un contenu, des commandes, par exemple à destination du récepteur, ou de façon plus large, tout message autre que le contenu proprement dit.

Dans le procédé de l'invention, on sépare l'ensemble des messages d'autorisation en plusieurs catégories, au minimum deux. Dans les modes de réalisation illustrés par les figures 3 et 4, six catégories sont illustrées. Dans l'exemple représenté, l'ensemble des messages d'autorisation est segmenté en messages globaux, partagés et individuels. Les messages globaux contiennent les messages qui sont destinés à tous les utilisateurs reliés à un centre de gestion. Ces messages globaux sont notés EMM-G sur la figure. Les messages partagés sont des messages destinés à un groupe de récepteurs, ce groupe étant un sous-ensemble de tous les récepteurs mobiles reliés au centre de gestion. Ces messages sont notés EMM-S sur les figures. Les messages individuels sont destinés à un récepteur particulier. Ils sont notés EMM-U.

L'ensemble des messages d'autorisation globaux n'est pas segmenté. Les messages d'autorisation partagés sont segmentés en deux parties sur les figures 3 et 4. Une première segmentation est faite en fonction du type de récepteur mobile concerné. Parmi les récepteurs, on peut notamment utiliser des téléphones portables, des récepteurs destinés à être placés dans une voiture ou un autre véhicule, des récepteurs du type assistant personnel ou des récepteurs spécialement conçus pour l'application choisie.

Le premier sous-ensemble de messages d'autorisation, noté EMM-S Type 1 sur les figures 3 et 4 pourrait par exemple contenir les messages d'autorisation partagés destinés aux téléphones portables, alors que le sous-ensemble EMM-S Type 2 pourrait contenir les messages d'autorisation partagés destinés aux autres récepteurs.

Les messages d'autorisation individuels sont également séparés en plusieurs catégories, notées EMM-U Type i et EMM-U type ii. Selon un exemple concret, cette segmentation peut également se faire sur la base du type de récepteur mobile auquel le message est destiné. A titre d'exemple, supposons que les messages de la catégorie EMM-U Type i sont destinés aux téléphones portables et la catégorie notée EMM-U Type ii sont ceux destinés aux récepteurs autres que les téléphones portables.

Le sous-ensemble noté EMM-U Type ii, dont les messages sont destinés aux récepteurs autres que les téléphones portables, est à son tour séparé en deux parties. Cette séparation est basée sur un paramètre du récepteur mobile concerné. A titre d'exemple, l'une des parties pourrait contenir tous les messages destinés à des récepteurs ayant un numéro d'identification pair, ce groupe étant noté "0" sur les figures 3 et 4, et l'autre partie pourrait contenir les messages à destination des récepteurs ayant un numéro d'identification impair, ce groupe étant noté "1" sur ces figures. Ceci a l'avantage de séparer le groupe en deux parties, ce qui permet un meilleur traitement, comme cela est expliqué ci-dessous.

Six catégories sont ainsi définies en fonction de types de messages d'autorisation et de paramètres des récepteurs.

Selon le procédé de l'invention, des paquets de messages d'autorisation sont ensuite définis sur la base des segmentations réalisées précédemment. Dans le mode de réalisation illustré par la figure 3, chaque segment correspond à un paquet spécifique, notés CAT1, CAT2,..., CAT6.

Dans le mode de réalisation illustré par la figure 4, plusieurs catégories sont regroupées pour former un paquet. A titre d'exemple, le premier paquet noté EMM CT1 est formé des catégories comprenant les messages d'autorisation globaux EMM-G et les messages d'autorisation partagés destinés aux téléphones portables.

Le deuxième paquet, noté EMM CT2 comprend les messages d'autorisation globaux EMM-G, les messages d'autorisation partagés destinés aux récepteurs mobiles autres que les téléphones portables et les messages d'autorisation individuels destinés aux récepteurs mobiles autres que les téléphones portables ayant un numéro d'identification pair.

Finalement, le troisième paquet, noté EMM CT3 comprend les messages d'autorisation globaux EMM-G, les messages d'autorisation partagés destinés aux récepteurs mobiles autres que les téléphones portables et les messages d'autorisation individuels destinés aux récepteurs mobiles autres que les téléphones portables ayant un numéro d'identification impair.

Il est à noter que l'une des segmentations définies ci-dessus, correspondant aux messages d'autorisation individuels destinés aux téléphones portables, n'est introduite dans aucun paquet, pour une raison expliquée plus bas.

Le mode de réalisation particulier illustré par la figure 4 correspond aux données envoyées selon la réalisation de la figure 1. Comme on peut le voir sur cette figure, les catégories EMM CT1, EMM CT2 et EMM CT3 définies précédemment sont diffusées sous la forme de paquets de la même manière que les services. Elles sont considérées comme des données de service par le récepteur. Chaque paquet de message d'autorisation est envoyé comme un service distinct.

En référence à la figure 2, qui se place du côté réception, le récepteur mobile concerné n'est intéressé que par le paquet de messages d'autorisation de la première catégorie EMM CT1. Il est enclenché uniquement pour la réception de ce paquet. Lorsque les autres paquets sont diffusés, il est en mode veille et ne les reçoit donc pas, ce qui permet une économie d'énergie substantielle, comme indiqué précédemment.

Lorsque les catégories sont définies comme expliqué en référence à la figure 3, la réception et le traitement des informations est illustré par la figure 5. Prenons le cas où le récepteur mobile considéré est un téléphone mobile. Dans ce cas, il recevra tout d'abord les messages d'autorisation globaux qui sont par définition destinés à tous les récepteurs. Ceci correspond à la première catégorie CAT1. Il recevra également les messages d'autorisation partagés destinés aux téléphones portables, ce qui correspond à la deuxième catégorie notée CAT2. Les messages d'autorisation individuels destinés aux téléphones portables correspondent à la quatrième catégorie définie précédemment, dont les messages ne font pas partie du flux dans l'exemple choisi. Ces messages étant destinés chacun à récepteur particulier, ils sont supposés être envoyés sous forme de message individuel par des moyens connus (SMS, TEXTO) et chaque téléphone portable ne reçoit que les messages individuels qui lui sont destinés.

Les paquets de messages sont envoyés par catégorie selon une fréquence et un cycle clairement définis. Ceci permet au récepteur de ne scruter que les paquets de messages qui sont susceptibles de le concerner. Les paquets que le récepteur doit recevoir peuvent être déterminés automatiquement par le récepteur. Une manière de déterminer automatiquement quels sont les paquets qui peuvent concerner un récepteur mobile particulier, consiste pour celui-ci, à scruter tous les services lors d'une étape d'initialisation. A partir des informations contenues dans ces services, le récepteur mémorise quel service il doit recevoir à l'avenir et quels services il ne doit pas recevoir.

Dans le mode de réalisation illustré par la figure 4, les catégories de messages sont regroupées de façon à former des paquets spécifiques. Ces paquets sont envoyés comme cela est illustré par la figure 1 et traités comme indiqué par la figure 6.

En reprenant l'hypothèse que le récepteur est un téléphone mobile, ce récepteur devra recevoir, comme précédemment, les messages d'autorisation globaux destinés à tous les récepteurs ainsi que les messages d'autorisation destinés aux téléphones portables. Ces messages sont regroupés dans la première catégorie notée EMM CT1.

Le récepteur appartenant à cette catégorie et ayant l'accès au service S1 sera actif uniquement lorsque des données relatives à ce service S1 sont diffusées et lorsque des messages de la catégorie EMM CT1 sont diffusés. Ceci correspond au cas illustré par la figure 2. En dehors de ces périodes, le récepteur peut être mis en mode veille.

La présente invention est intéressante par le fait que, au lieu de recevoir l'ensemble des messages d'autorisation, dont une majorité ne concernent de toute façon pas le récepteur, ceux-ci sont segmentés en catégories qui sont susceptibles de concerner les récepteurs qui reçoivent les messages. Ainsi, une importante économie d'énergie peut être réalisée par le récepteur qui n'est actif que pendant les périodes pendants lesquelles cela peut se révéler utile.

Les segmentations indiquées sont données à titre d'exemple. Il est clair que d'autres catégories pourraient être utilisées pour la segmentation. Au lieu de regrouper tous les récepteurs mobiles à part les téléphones portables dans une seule catégorie, il est bien entendu possible de former des catégories pour les différents types de récepteurs mobiles existants.

En ce qui concerne le numéro d'identification, ce numéro pouvant être celui d'un composant physique, d'un composant logiciel ou d'un certificat du récepteur, la segmentation est basée sur la parité du numéro dans l'exemple décrit. Il est clair que d'autres séparations pourraient être faites, par exemple par fonction modulo, par plages contiguës de numéros d'identification. Dans ce dernier cas, les plages sont définies de telle façon qu'il n'y ait pas "trop" de catégories distinctes et que chaque plage ne contient pas "trop" de récepteurs.

Une autre segmentation envisageable concerne les catégories de droits d'accès. En effet, il est possible de séparer les messages d'autorisation selon le type d'abonnement, les canaux spécifiques autorisés ou d'autres critères similaires. Une autre segmentation peut se faire sur la base d'une version de récepteur mobile, d'une configuration de module de sécurité associé au récepteur mobile ou d'une version de logiciel utilisée dans le récepteur notamment.

## Revendications

1. Procédé de traitement de messages d'autorisation d'accès à une pluralité de contenus à accès conditionnel par un récepteur mobile, ces contenus étant diffusés de façon cyclique sous la forme de paquets répartis sur des services différents (S1, S2,...) **caractérisé en ce que** ces messages d'autorisation (EMM) sont transmis de façon cyclique par paquets de messages, les paquets de messages d'autorisation étant transmis dans les mêmes cycles que les contenus à accès conditionnel, ces paquets de messages d'autorisation comprenant un sous-ensemble de messages d'autorisation, au moins un des paquets de messages d'autorisation étant destiné audit récepteur mobile et étant envoyé sur un premier service, et au moins un autre des paquets n'étant pas destiné au récepteur mobile et étant envoyé sur un second service distinct dudit premier service, ce procédé comportant une phase d'initialisation et une phase d'utilisation, la phase d'initialisation comportant les étapes suivantes :
- réception de tous les paquets de messages d'autorisation (EMM) par ledit récepteur mobile pendant la durée d'au moins un cycle (ct);
- détermination d'au moins un groupe de récepteurs auquel appartient ledit récepteur mobile;
- parmi les paquets de messages d'autorisation reçu pendant un cycle, détermination de tous les paquets de messages d'autorisation destinés audit groupe de récepteurs auquel appartient ledit récepteur mobile;
la phase d'utilisation comportant les étapes suivantes :
- réception desdits paquets de messages d'autorisation destiné au groupe de récepteurs auquel appartient ledit récepteur et absence de réception d'au moins un paquet de messages d'autorisation destiné à un groupe de récepteurs auquel ledit récepteur mobile n'appartient pas;
- traitement par le récepteur mobile, desdits messages reçus dans les paquets.

2. Procédé de traitement de messages d'autorisation selon la revendication 1, **caractérisé en ce que** ledit récepteur mobile reçoit un seul paquet de messages d'autorisation (EMM) par cycle et **en ce que** seul ce paquet est traité au cours de chaque cycle.

3. Procédé de traitement de messages d'autorisation selon la revendication 1, **caractérisé en ce que** ledit récepteur mobile est mis en veille lorsque les paquets de messages d'autorisation envoyés ne font pas partie des paquets de messages d'autorisation destinés audit récepteur mobile.

4. Procédé de traitement de messages d'autorisation selon la revendication 3, **caractérisé en ce que** la mise en veille est effectuée sur la base d'un temps de cycle (ct) et d'un instant à l'intérieur du cycle, à partir duquel le paquet de message d'autorisation concernant ledit récepteur mobile est envoyé.

5. Procédé de transmission de messages d'autorisation d'accès à une pluralité de contenus à accès conditionnel à destination d'une pluralité de récepteurs mobiles, ces contenus étant diffusés de façon cyclique sous la forme de paquets répartis sur des services différents, ce procédé comportant les étapes suivantes :
- définition d'au moins un ensemble de messages d'autorisation (EMM) dont une première partie, formant une première catégorie de messages, est destinée à un premier groupe de récepteurs mobiles et dont une seconde partie, formant une seconde catégorie de messages, est destinée à un second groupe de récepteurs mobiles;
- création d'un premier paquet de messages d'autorisation (EMM CT1,...) contenant au moins ladite première partie de l'ensemble des messages d'autorisation;
- création d'un second paquet de messages d'autorisation (EMM CT2,...) contenant au moins ladite seconde partie de l'ensemble des messages d'autorisation, lesdits paquets de messages d'autorisation étant transmis dans les mêmes cycles que les contenus à accès conditionnel;
- transmission dudit premier paquet de messages d'autorisation sur un premier service (S1, S2,...), sans envoi préalable d'indications de l'heure à laquelle des messages seront envoyés, indiquant au récepteur mobile quels paquets de messages la concerne;
- transmission dudit second paquet de messages d'autorisation sur un second service distinct dudit premier service sans envoi préalable d'indications de l'heure à laquelle des messages seront envoyés, indiquant au récepteur mobile quels paquets de messages la concerne.

6. Procédé de transmission de messages d'autorisation selon la revendication 5, **caractérisé en ce que** les messages d'autorisation sont séparés en plusieurs ensembles définissant chacun au moins une catégorie de messages d'autorisation.

7. Procédé de transmission de messages d'autorisation selon la revendication 6, **caractérisé en ce que** tout ou partie du solde des messages d'autorisation de l'ensemble est transmis sur au moins un troisième service distinct du premier et second service.

8. Procédé de transmission de messages d'autorisation selon la revendication 6, **caractérisé en ce que** les catégories des messages d'autorisation sont définies sur la base de critères liés à au moins un paramètre des récepteurs mobiles concernés.

9. Procédé de transmission de messages d'autorisation selon la revendication 8, **caractérisé en ce que** le paramètre des récepteurs mobiles est choisi parmi le type de récepteur mobile, un numéro d'identification, une catégorie de droits d'accès ou une version de récepteur mobile ou de configuration dudit récepteur mobile.

10. Procédé de transmission de messages d'autorisation selon les revendications 6 et 8, **caractérisé en ce que** les catégories des messages d'autorisation sont définies sur la base de critères liés à la fois au type de message d'autorisation et au paramètre lié aux récepteurs mobiles concernés.

11. Procédé de transmission de messages d'autorisation selon la revendication 5, **caractérisé en ce que** les paquets de messages d'autorisation comportent une seule catégorie de messages d'autorisation.

12. Procédé de transmission de messages d'autorisation selon la revendication 5, **caractérisé en ce qu'**au moins l'un des paquets de messages d'autorisation comporte plusieurs catégories de messages d'autorisation.

## Claims

1. Method for processing authorization messages to access for a plurality of conditional access contents by a mobile receiver, these contents being broadcast in a cyclic way in the form of packets spread over different services (S1, S2, ...), **characterised in that** these authorization messages (EMM) are transmitted in a cyclic way in packets of messages, the packets of authorisation messages being transmitted in the same cycles as the conditional access contents, these packets of authorisation messages comprising a subset of authorization messages, at least one of the packets of authorization messages being intended for said mobile receiver and being sent over a first service, and at least another one of the packets not being intended for the mobile receiver and being sent over a second service different from said first service, said method comprising an initialization phase and an operation phase, the initialization phase comprising the following steps:
- reception of all the packets of authorization messages (EMM) by said mobile receiver within the duration of at least one cycle (ct);
- determination of at least one group of receivers to which said mobile receiver belongs;
- among the packets of authorization messages received during a cycle, determination of all the packets of authorization messages intended for the said group of receivers to which said mobile receiver belongs;
the operation phase comprising the following steps :
- reception of said packets of authorization messages intended for the group of receivers to which said receiver belongs and absence of reception of at least one packet of authorization messages intended for a group of receivers to which said mobile receiver does not belong;
- processing by the mobile receiver, of said messages received in the packets.

2. Method for processing authorization messages according to claim 1, **characterised in that** said mobile receiver receives only one packet of authorization messages (EMM) per cycle and **in that** only this packet is processed during each cycle.

3. Method for processing authorization messages according to claim 1, **characterised in that** said mobile receiver is set to standby mode when the sent packets of authorization messages are not part of said packets of authorization messages intended for said mobile receiver.

4. Method for processing authorization messages according to claim 3, **characterised in that** the setting to standby mode is made based on a cycle time (ct) and a point of time within the cycle, from which the packet of authorization messages concerning said mobile receiver is sent.

5. Method for transmitting authorization messages for access to a plurality of conditional access contents intended for a plurality of mobile receivers, these contents being broadcast in a cyclic way in the form of packets spread over different services, this method comprising the following steps:
- definition of at least one set of authorization messages (EMM), a first part of which, forming a first category of messages, is intended for a first group of mobile receivers and a second part of which, forming a second category of messages, is intended for a second group of mobile receivers;
- creation of a first packet of authorization messages (EMM, CT1, ...) containing at least the said first part of the set of authorization messages;
- creation of a second packet of authorization messages (EMM, CT2, ...) containing at least the said second part of the set of authorization messages, said packets of authorisation messages being transmitted in the same cycles as the conditional access contents;
- transmission of the said first packet of authorization messages over a first service (S1, S2, ...), without sending previous indication as to the time at which messages will be sent, indicating to the mobile receiver which packets of messages are of concern to it;
- transmission of the said second packet of authorization messages over a second service distinct from the said first service without sending previous indications as to the time at which messages will be sent, indicating to the mobile receiver which packets of messages are of concern to it.

6. Method for transmitting authorization messages according to claim 5, **characterised in that** the authorization messages are divided into several sets, each of them defining at least one category of authorization messages.

7. Method for transmitting authorization messages according to claim 6, **characterised in that** all or part of the remaining authorization messages from the set are transmitted over at least a third service different from the first and second services.

8. Method for transmitting authorization messages according to claim 6, **characterised in that** the categories of authorization messages are defined on the basis of criteria linked with at least one parameter of the concerned mobile receivers.

9. Method for transmitting authorization messages according to claim 8, **characterised in that** the parameter of the mobile receivers is chosen among the type of mobile receiver, an identification number, a category of access rights or a mobile receiver version or configuration version of said mobile receiver.

10. Method for transmitting authorization messages according to claims 6 and 8, **characterised in that** the categories of the authorization messages are defined on the basis of criteria linked simultaneously to the type of authorization message and to the parameter linked to the concerned mobile receivers.

11. Method for transmitting authorization messages according to claim 5, **characterised in that** the packets of authorization messages comprise a single category of authorization messages.

12. Method for transmitting authorization messages according to claim 5, **characterised in that** at least one of the packets of authorization messages comprise several categories of authorization messages.

## Patentansprüche

1. Verfahren zur Behandlung von Zugangs-Berechtigungsmeldungen zu eine Vielzahl von zugangskontrollierten Inhalten durch einen Mobilempfänger, wobei diese Inhalte zyklisch in Form von Paketen verbreitet werden, die auf verschiedene Dienste (S1, S2,...) verteilt sind, **gekennzeichnet dadurch, dass** diese Berechtigungsmeldungen (EMM) zyklisch durch Pakete von Meldungen übertragen werden, wobei die Pakete von Berechtigungsmeldungen in denselben Zyklen übertragen werden wie die zugangskontrollierten Inhalte, wobei diese Pakete von Berechtigungsmeldungen eine Untereinheit von Berechtigungsmeldungen umfassen, wobei mindestens eines der Pakete von Berechtigungsmeldungen für den genannten Mobilempfänger bestimmt ist und über einen ersten Dienst gesendet wird, und mindestens ein anderes der Pakete nicht für den Mobilempfänger bestimmt ist und über einen zweiten Dienst gesendet wird, der vom genannten ersten Dienst verschieden ist, wobei dieses Verfahren eine Initialisierungsphase und eine Benutzungsphase umfasst, wobei die Initialisierungsphase die folgenden Phasen aufweist:
Empfang von allen Paketen von Berechtigungsmeldungen (EMM) durch den Mobilempfänger während der Dauer mindestens eines Zyklus (ct);
Ermittlung von mindestens eine Gruppe von Empfängern, zu denen der besagte Mobilempfänger gehört;
aus den Paketen von Berechtigungsmeldungen, die während eines Zyklus erhalten werden, Ermittlung aller Pakete von Berechtigungsmeldungen, die für die genannte Gruppe von Empfängern bestimmt sind, der der besagte Mobilempfänger angehört;
wobei die Benutzungsphase die folgenden Schritte umfasst:
Empfang der genannten Pakete von Berechtigungsmeldungen, die für die Gruppe von Empfängern bestimmt sind, der der besagte Mobilempfänger angehört, und
Nichtempfang von mindestens einem Paket von Berechtigungsmeldungen, das für eine Gruppe von Empfängern bestimmt ist, der der besagte Mobilempfänger nicht angehört;
Behandlung, durch den Mobilempfänger, der genannten in den Paketen empfangenen Meldungen.

2. Verfahren zur Behandlung von Berechtigungsmeldungen nach Anspruch 1, **gekennzeichnet dadurch, dass** besagter Mobilempfänger ein einziges Paket von Berechtigungsmeldungen (EMM) pro Zyklus empfängt sowie dadurch, dass nur dieses Paket im Verlauf jedes Zyklus behandelt wird.

3. Verfahren zur Behandlung von Berechtigungsmeldungen nach Anspruch 1, **gekennzeichnet dadurch, dass** besagter Mobilempfänger in Stand-by-Betrieb versetzt wird, wenn die versandten Pakete von Berechtigungsmeldungen nicht zu den Paketen von Berechtigungsmeldungen gehören, die für den genannten Mobilempfänger bestimmt sind.

4. Verfahren zur Behandlung von Berechtigungsmeldungen nach Anspruch 3, **gekennzeichnet dadurch, dass** die Versetzung in den Stand-by-Betrieb auf der Basis einer Zykluszeit (ct) und eines Moments im Innern des Zyklus erfolgt, ab dem das Paket von Berechtigungsmeldungen, die besagten Mobilempfänger betreffen, gesendet wird.

5. Verfahren zur Übertragung von Zugangs-Berechtigungsmeldungen zu einer Vielzahl von zugangskontrollierten Inhalten an eine Vielzahl von Mobilempfängern, wobei diese Inhalte zyklisch in Form von Paketen verbreitet werden, die auf verschiedene Dienste verteilt sind, wobei dieses Verfahren die folgenden Phasen umfasst:
Definition von mindestens einer Einheit von Berechtigungsmeldungen (EMM), von der ein erster Teil, der eine erste Kategorie von Meldungen bildet, für eine erste Gruppe von Mobilempfängern bestimmt ist und von der ein zweiter Teil, der eine zweite Kategorie von Meldungen bildet, für eine zweite Gruppe von Mobilempfängern bestimmt ist;
Schaffung eines ersten Paketes von Berechtigungsmeldungen (EMM CT1,...), das mindestens besagten ersten Teil der Einheit von Berechtigungsmeldungen enthält;
Schaffung eines zweiten Pakets von Berechtigungsmeldungen (EMM CT2,...), das mindestens besagten zweite Teil der Einheit von Berechtigungsmeldungen enthält,
wobei die Pakete von Berechtigungsmeldungen in denselben Zyklen wie die zugangskontrollierten Inhalte übertragen werden;
Sendung des genannten ersten Paketes von Berechtigungsmeldungen über einen ersten Dienst (S1, S2,...), ohne vorhergehende Versendung von Angaben über den Zeitpunkt, an dem die Meldungen versandt werden, wobei dem Mobilempfänger angegeben wird, welche Pakete von Meldungen ihn betreffen;
Sendung des genannten zweiten Paketes von Berechtigungsmeldungen über einen zweiten Dienst, der vom genannten ersten Dienst verschieden ist, ohne vorhergehende Versendung von Angaben über den Zeitpunkt, an dem die Meldungen versandt werden,
wobei dem Mobilempfänger angegeben wird, welche Pakete von Meldungen ihn betreffen.

6. Verfahren zur Übertragung von Berechtigungsmeldungen nach Anspruch 5, **gekennzeichnet dadurch, dass** die Berechtigungsmeldungen in mehrere Einheiten unterteilt sind, von denen jede mindestens eine Kategorie von Berechtigungsmeldungen definiert.

7. Verfahren zur Übertragung von Berechtigungsmeldungen nach Anspruch 6, **gekennzeichnet dadurch dass** das ganze Saldo oder ein Teil davon der Berechtigungsmeldungen der Einheit über mindestens einen dritten Dienst übertragen wird, der vom ersten und zweiten Dienst verschieden ist.

8. Verfahren zur Übertragung von Berechtigungsmeldungen nach Anspruch 6, **gekennzeichnet dadurch, dass** die Kategorien der Berechtigungsmeldungen auf der Grundlage von Kriterien definiert werden, die mit mindestens einem Parameter der betroffenen Mobilempfänger verbunden sind.

9. Verfahren zur Übertragung von Berechtigungsmeldungen nach Anspruch 8, **gekennzeichnet dadurch, dass** der Parameter der Mobilempfänger unter der Art des Mobilempfängers ausgewählt wird, einer Identifikationsnummer, einer Kategorie von Zugangsrechten oder einer Version des Mobilempfängers oder Konfiguration des genannten Mobilempfängers.

10. Verfahren zur Übertragung von Berechtigungsmeldungen nach den Ansprüchen 6 und 8, **gekennzeichnet dadurch, dass** die Kategorien der Berechtigungsmeldungen auf der Grundlage von Kriterien definiert werden, die gleichzeitig mit der Art der Berechtigungsmeldung und dem Parameter verbunden sind, der mit den betroffenen Mobilempfängern verbunden ist.

11. Verfahren zur Übertragung von Berechtigungsmeldungen nach Anspruch 5, **gekennzeichnet dadurch, dass** die Pakete von Berechtigungsmeldungen eine einzige Kategorie von Berechtigungsmeldungen enthalten.

12. Verfahren zur Übertragung von Berechtigungsmeldungen nach Anspruch 5, **gekennzeichnet dadurch, dass** mindestens eines der Pakete von Berechtigungsmeldungen mehrere Kategorien von Berechtigungsmeldungen umfasst.
